# EUROPEAN PATENT SPECIFICATION

(11) **EP 3 242 915 B1**
(45) Date of publication and mention of the grant of the patent: **08.09.2021**
(21) Application number: 15705093.1
(22) Date of filing: 07.01.2015
(51) Int. Cl.: C09D 11/00, C03C 3/064, C03C 3/076, C03C 8/02, C09D 11/322, C09D 11/38, C03C 3/066, C03C 3/091, C03C 3/093, C03C 8/04, C03C 17/00, C03C 3/097, C03C 8/08, C03C 8/14, C03C 8/16

(54) **GLASS FRIT COMPOSITION AND CERAMIC INKJET INK COMPRISING THE SAME**
GLASFRITTENZUSAMMENSETZUNG UND KERAMISCHE TINTENSTRAHLTINTE DAMIT
COMPOSITION DE FRITTE DE VERRE ET ENCRE POUR IMPRESSION JET D'ENCRE SUR CÉRAMIQUE LA COMPRENANT

(43) Date of publication of application: 15.11.2017
(73) Proprietor: Fenzi SPA, 20067 Tribiano (IT); Tecglass, S.L., 36500 Lalin Pontevedra (ES)
(72) Inventor: TULADHAR, Tri Ratna, I-20067 Tribiano (IT); DI LONARDO, Domenico, I-20067 Tribiano (IT); FENZI, Fabio Enzo, I-20067 Tribiano (IT)
(74) Representative: Villa, Livia
(86) International application number: PCT/IB2015/000007
(87) International publication number: WO 2016/110724

(56) References cited:
- EP-A1- 0 895 969
- WO-A1-01/30714
- WO-A1-2005/052071
- WO-A1-2013/126369
- WO-A2-2007/036942
- US-A1- 2008 210 122
- US-A1- 2014 026 619
- None

## Description

### FIELD OF THE INVENTION

The present invention concerns a glass frit composition and a process for producing the same. Furthermore, the present invention concerns a ceramic inkjet ink comprising said glass frit composition and a process for producing said ink. Additionally, the present invention concerns a method for printing on ceramic substrate such as glass, by using said ink.

### STATE OF THE ART

Traditionally, inorganic ceramic paints containing glass frit and inorganic pigments are printed on ceramic surfaces by silk-screen, roller coating, spray coating and curtain coating. Typical paint viscosities for such applications are within the range 100s-1000s mPa.s (system dependent). These ceramic paints have high solid contents > 50% and particle size in the range of 2-10 µm.

To date, digital printing ceramic paints are being explored with limited success. Standard commercial inkjet systems have much strict requirements in terms of both physical and chemical properties to meet printhead and jetting criteria.

US 2008/210122 A1 concerns an ink for printing on ceramic surfaces such as glass, which contains glass frits for silica nanoparticles and optionally a pigment, and is suitable for ink jet printing. The problem posed in this patent application was the fact that "ink which is solid at room temperatures and has to be heated at the inkjet head prior to printing is awkward to handle, load, and requires special equipment for actual printing. If the ink is liquid at room temperature, it will make the performance and maintenance of the printer much better." (par. [0018]) Therefore, the aim of this invention was to provide an ink composition which is liquid at room temperature. The ink composition thus is characterized by:
(a) having viscosity below 20 cps at jetting temperature;
(b) becoming an integral part of the substrate upon exposure to temperatures above 500°C, and comprises:
   1) a vehicle being a liquid at room temperature;
   2) sub-micron particles of binding composition, said sub-micron particles of binding composition being typically made of a glass frit composed of 50-70% SiO₂, 10-20% Bi₂O₃, and 3-20% B₂O₃. (par. [0061])

WO2007/036942 A2 discloses an inkjet ink composition comprising:
a) a liquid vehicle,
b) a (Bi-containing) binding frit, with a melting point lower than 600°C, and
c) a Zn-containing glass frit, with a melting point of 50°C higher than the melting point of b).

Therefore, this document is focused on physical parameters and on the presence of liquid vehicle. The different melting points are deemed to produce an etch-like effect on a ceramic surface once brought to 500-700°C, ascribed to the dispersed and only partially fused particles of component (c) within the fused binding composition (b).

WO 2005/052071 A1 discloses a digital printing ink composition comprising at least a glass frit or metal particles having a particle size less than 2 um and a dispersion medium, preferably comprising also an inorganic pigment. The printed ink coating can be fired to yield a permanent coating. The particle size of the glass frit seems to be the only parameter actually disclosed in this document, as the final composition of the glass frit itself is not described.

The object of the present invention is to provide an ink which is able to meet said strict requirements.

### SUMMARY OF THE INVENTION

The above object has been achieved by a glass frit composition as described in claim 1, and a ceramic inkjet ink comprising said glass frit composition.

In a further aspect, a process for producing said glass frit composition is provided.

In another aspect, a process for producing said ceramic inkjet ink is provided.

In an additional aspect, the present invention concerns a method for printing on ceramic substrate such as glass, by using said ink.

In an even further aspect, the present invention relates to a glass frit composition and a ceramic inkjet ink which can be obtained by said processes.

The characteristics and the advantages of the present invention will become apparent from the following detailed description and from the working examples provided for illustrative purposes and from the accompanying Figures, wherein:
- Figure 1 shows (a) a mixture of pigments and glass frit composition obtained according a comparative process, and (b) a mixture of pigments and glass frit composition obtained according to the process of the present invention;
- Figure 2 shows (a) a comparative mixture of additives, pigments and glass frit composition, and (b) a mixture of additives, pigments and glass frit composition according to the present invention; and
- Figure 3 shows (a) a comparative ink on a glass surface, and (b) the ceramic inkjet ink on a glass surface according to the present invention.

### DETAILED DESCRIPTION OF THE INVENTION

The subject of the invention therefore is a glass frit composition comprising:
- 20-49 wt. % SiO₂,
- 3-20 wt. % B₂O₃,
- 1-9 wt. % Na₂O,
- 0.1-5 wt. % K₂O,
- 1-7 wt. % TiO₂,
- 0.01-5 wt. % Al₂O₃, and
- a mixture of:
   i) 50-60 wt. % Bi₂O₃, and 7-35 wt. % ZnO, or
   ii) 7-15 wt. % ZnO, and up to 5 wt. % Li₂O,
   iii) 45-55 wt. % Bi₂O₃, and up to 5 wt. % Li₂O, or
   iv) 40-45 wt. % Bi₂O₃, 0.5-3 wt. % ZnO, and up to 4 wt. % Li₂O,
said glass frit composition being in the form of particles having a volume particle size distribution Dv₉₀ of less than 2 µm, as measured by laser diffraction, wherein "wt. %" means weight percent of the total weight of the glass frit composition.

In the context of the present invention, the glass frit composition has the form of particles. The shape of the particles can be any shape. The size of the particle is defined by their "volume particle size distribution".

For the purposes of the present invention, the term "volume particle size distribution" is to be understood as defining the relative amount by volume, of particles present according to size. The volume particle size distribution is designated as Dv₉₀, defining the distribution of the size (or diameter) of 90 percent of the particles by volume. This parameter is measured by laser diffraction, unless otherwise defined. The laser diffraction methods depend upon analysis of the "halo" of diffracted light produced when a laser beam passes through a dispersion of particles in air or in a liquid. The angle of diffraction increases as particle size decreases, so that this method is particularly good for measuring sizes between 0.1 and 3,000 µm. Advances in sophisticated data processing and automation have allowed this to become the dominant method used in industrial particle-size distribution determination. This technique is relatively fast and can be performed on very small samples. A particular advantage is that the technique can generate a continuous measurement for analyzing process streams. Laser diffraction measures particle size distributions by measuring the angular variation in intensity of light scattered as a laser beam passes through a dispersed particulate sample. Large particles scatter light at small angles relative to the laser beam and small particles scatter light at large angles. The angular scattering intensity data is then analyzed to calculate the size of the particles responsible for creating the scattering pattern, using the Mie theory of light scattering. The particle size is reported as a volume equivalent sphere diameter.

The upper boundary of 2 µm makes the above glass frit particles particularly suitable for the digital inkjet printheads typically having nozzle openings of about 15-50 µm, because problems of clogging are advantageously prevented. At the same time, the risk of sedimentation over time is conveniently reduced, thus giving a long-term storage stability. Preferably, the glass frit composition of the invention is in the form of particles having a volume particle size distribution Dv₉₀ of less than 1 µm, as measured by laser diffraction. This allows to further reduce the risk of sedimentation over time, when the glass frit particles are used in ink compositions, thus improving their stability.

More preferably, said particles have a volume particle size distribution Dv₉₀ of 0.1-1 µm. In fact, even if in terms of stability over time the particle size is desirable to be as small as possible, however, for values below 0.1 µm, the final colour intensity of the inkjet ink, once printed on a ceramic surface, can be negatively affected. For example, when a black inorganic pigment is used, the resulting printed surface could fade to greyish.

Preferably, the glass frit composition of the invention further comprises up to 7 wt. % of ZrO, CaO, BaO, MgO, P₂O₅, Fe₂O₃, SrO, or a mixture thereof.

It should be appreciated that the glass frit composition of the invention is such as to be lead-free. In fact, the glass frit composition of the invention is designed to achieve great performances although the absence of lead, as both bismuth oxide and zinc oxide at the given amounts showed to be valid substitute of lead oxide. Particularly, zinc oxide is cheaper than bismuth oxide, so that from the economical point of view the former is preferable. However, a higher bismuth oxide content is preferred when a higher chemical resistance is required by the final applications.

In first embodiments, the glass frit composition of the invention comprises:
- 20-30 wt. % SiO₂,
- 3-10 wt. % B₂O₃,
- 1-5 wt. % Na₂O,
- 0.1-2 wt. % K₂O,
- 1-5 wt. % TiO₂,
- 0.01-5 wt. % Al₂O₃, and
- a mixture of i) 50-60 wt. % Bi₂O₃, and 7-35 wt. % ZnO.

Preferably, the glass frit composition of the invention comprises:
- 20-30 wt. % SiO₂,
- 3-10 wt. % B₂O₃,
- 1-5 wt. % Na₂O,
- 0.1-2 wt. %K₂O,
- 1-5 wt. % TiO₂,
- 0.01-4 wt. % Al₂O₃, and
- a mixture of i) 50-55 wt. % Bi₂O₃, and 8-11 wt. % ZnO.

Preferably, the glass frit composition of the invention also comprises up to 2 wt. % of ZrO, more preferably up to 1.6 wt. % of ZrO.

These first embodiments can be lithium-free. Lithium oxide assists the melting of the frit and has a significant influence on the expansion coefficient and contraction rates. For these reasons the presence of lithium oxide can not be suitable for some specific applications. In these cases, said first embodiments can be successfully used, because these compositions allow to better control linear expansion of the frit.

In second embodiments, the glass frit composition of the invention comprises:
- 40-49 wt. % SiO₂,
- 10-20 wt. % B₂O₃,
- 5-9 wt. % Na₂O,
- 2-5 wt. % K₂O,
- 1-5 wt. % TiO₂,
- 0.1-1 wt. % Al₂O₃, and
- a mixture of ii) 7-15 wt. % ZnO, and up to 5 wt. % Li₂O.

Preferably, the glass frit composition of the invention comprises:
- 40-49 wt. % SiO₂,
- 10-20 wt. % B₂O₃,
- 5-9 wt. % Na₂O,
- 2-5 wt. % K₂O,
- 1-5 wt. % TiO₂,
- 0.1-1 wt. % Al₂O₃, and
- a mixture of ii) 9-13 wt. % ZnO, and up to 5 wt. % Li₂O.

More preferably, the glass frit composition of the invention also comprises up to 5 wt. % of a mixture of CaO, BaO, MgO, and P₂O₅.

In third embodiments, the glass frit composition of the invention comprises:
- 30-40 wt. % SiO₂,
- 3-10 wt. % B₂O₃,
- 1-5 wt. % Na₂O,
- 0.1-2 wt. % K₂O,
- 2-7 wt. % TiO₂,
- 0.01-0.5 wt. % Al₂O₃, and
- a mixture of iii) 45-55 wt. % Bi₂O₃, and up to 5 wt. % Li₂O.

Preferably, the glass frit composition of the invention comprises:
- 30-40 wt. % SiO₂,
- 3-10 wt. % B₂O₃,
- 1-5 wt. % Na₂O,
- 0.1-2 wt. % K₂O,
- 2-7 wt. % TiO₂,
- 0.01-0.5 wt. % Al₂O₃, and
- a mixture of iii) 45-50 wt. % Bi₂O₃, and up to 4 wt. % Li₂O.

More preferably, the glass frit composition of the invention also comprises up to 5 wt. % of a mixture of Fe₂O₃, and SrO.

In fourth embodiments, the glass frit composition of the invention comprises:
- 30-40 wt. % SiO₂,
- 3-10 wt. % B₂O₃,
- 1-5 wt. % Na₂O,
- 0.1-2 wt. % K₂O,
- 3-7 wt. % TiO₂,
- 0.01-1 wt. % Al₂O₃, and
- a mixture of iv) 40-45 wt. % Bi₂O₃, 0.5-3 wt. % ZnO, and up to 4 wt. % Li₂O. Preferably, the glass frit composition of the invention comprises:
- 30-40 wt. % SiO₂,
- 3-10 wt. % B₂O₃,
- 1-5 wt. % Na₂O,
- 0.1-2 wt. % K₂O,
- 3-7 wt. % TiO₂,
- 0.01-1 wt. % Al₂O₃, and
- a mixture of iv) 41-44 wt. % Bi₂O₃, 1-3 wt. % ZnO, and up to 3 wt. % Li₂O.

In other preferred embodiments, the glass frit composition consists of:
- 20-49 wt. % SiO₂,
- 3-20 wt. % B₂O₃,
- 1-9 wt. % Na₂O,
- 0.1-5 wt. % K₂O,
- 1-7 wt. % TiO₂,
- 0.01-1 wt. % Al₂O₃,
- up to 5 wt. % of CaO, BaO, MgO, P₂O₅, Fe₂O₃, SrO, or a mixture thereof, and
- a mixture of:
   i) 50-60 wt. % Bi₂O₃, and 7-12 wt. % ZnO, or
   ii) 7-15 wt. % ZnO, and up to 5 wt. % Li₂O, or
   iii) 45-55 wt. % Bi₂O₃, and up to 5 wt. % Li₂O, or
   iv) 40-45 wt. % Bi₂O₃, 0.5-3 wt. % ZnO, and up to 4 wt. % Li₂O,
said glass frit composition being in the form of particles having a volume particle size distribution Dv₉₀ of less than 2 µm, as measured by laser diffraction.

In a further aspect, the present invention concerns a process for producing the glass frit composition as above described, said process comprising the steps of:
1) mixing the oxides of the glass frit composition;
2) melting the mixed oxides to obtain a melted mixture;
3) cooling the obtained melted mixture;
4) dry-milling the so-cooled mixture to obtain a milled frit having a volume particle size distribution Dv₉₀ of less than 8 µm, preferably of 5 to 8 µm; and
5) wet-milling the dry-milled frit to achieve a volume particle size distribution Dv₉₀ of less than 2 µm.

For the purposes of the present invention, 'milling' is to be understood as a process of grinding materials. Dry-milling is a milling process occurring without solvent. Wet-milling occurs with a solvent.

The combination of step 4) and step 5) results in a highly stable glass frit composition with no or negligible sedimentation and having the desired volume particle size distribution Dv₉₀ of less than 2 µm.

Preferably, step 4) is carried out in a fluidized jet mill. For the purposes of the present invention, jet milling is to be understood as a process of using highly compressed air or other gasses, usually in a vortex motion, to impact fine particles against each other in a chamber.

Preferably, step 5) is carried out in the presence of a dispersant agent and a solvent.

The dispersant agent and solvent allow to prevent the fine frit particles from reaggregating.

Step 5) is preferably carried out by mixing in a high shear mixer and then wet-milling in a high speed mill with special grinding chamber components such as zirconia, silicon nitrite and/or silicon carbide.

The wet-milling can be carried out in batch in multipass operation until the desired particle size is obtained.

In preferred embodiments, said high speed mill is a horizontal bead mill, with a Zirconia grinding chamber.

The wet-milling can be carried out in batch in multipass operation until the desired particle size is obtained.

More preferably, the glass frit composition of step 5) comprises 50-70 wt.% of dry-milled frit, up to 10 wt.% of a dispersant agent, and 20-45 wt.% of a solvent.

In particularly preferred embodiments, the glass frit composition of step 5) comprises 60-70 wt.% of dry-milled frit, 1-3 wt.% of a dispersant agent, and 29-37 wt.% of a solvent. Preferably, the dispersant agent is a copolymer with acidic group (Disperbyk 110™, Disperbyk 111™), alkylol ammonium salt of copolymer with acidic groups (Disperbyk-180™), solution of high molecular weight block copolymers with pigment affinic groups (Disperbyk 182™, Disperbyk 184™, Disperbyk 190™), copolymer with pigment affinic groups (Disperbyk 191™, Disperbyk 192™, Disperbyk 194™, Tego Dispers 7502™, Tego Dispers 752W™), block-copolymer with pigment affinic groups (Disperbyk 2155™), solution of alkylol ammonium salt of a higher molecular weight acidic polymer (Anti-terra-250™), structured acrylate copolymer with pigment affinic groups (Disperbyk 2010™, Disperbyk 2015™), polyvinylpyrrolidone (PVP K-15™, PVP K-30™, PVP K-60™), polymeric hyperdispersant (Solsperse J930™, Solsperse J945™, Solsperse J955™, Solsperse J980™, Solsperse J981™, Solsperse J944™, Solsperse J950™, Solsperse J955™), or a mixture thereof.

The solvent can be one or more alcohols, such as methyl alcohol, ethyl alcohol, propyl alcohols, butyl alcohols; glycols, such as methyl glycol (MG), ethyl glycol, propyl glycol, butyl glycol (BG); glycol ethers, such as methoxy propanol (PM), ethoxy propanol (EP), diacetone propanol (DAA), methoxy butanol, dipropylene glycol monomethyl ether (DPM), tripropylene glycol methyl ether (TPM), propylene glycol mono methyl ether (PM), di or tri propylene glycol mono propyl ether (DPnP, TPnP), butyl diglycol (BDG); esters, such as methyl acetate, ethyl acetate (ETAC), propyl acetate(IPAC), butyl acetate (BUAC), methoxy propyl acetate (PMA), ethyl-3-ethoxy-propanol (EEP); ketones, such as acetone, methyl ethyl ketone (MEK), methyl butyl ketone, cyclohexanone; aromatics, such as toluene, xylene, solvent naptha; aliphatics, such as cyclohexane, petroleum ether, white spirit, turpentine, water, or a mixture thereof.

Preferably, the solvent is an alcohol, selected from methyl alcohol, ethyl alcohol, propyl alcohol, and butyl alcohol, a glycol selected from methyl glycol, ethyl glycol, propyl glycol, and butyl glycol, a glycol ether selected from methoxy propanol, ethoxy propanol, diacetone propanol, methoxy butanol, dipropylene glycol monomethyl ether, tripropylene glycol methyl ether, propylene glycol mono methyl ether, di- or tri-propylene glycol mono propyl ether, and butyl diglycol, an ester selected from methyl acetate, ethyl acetate, propyl acetate, butyl acetate, methoxy propyl acetate, and ethyl-3-ethoxy-propanol, a ketone selected from acetone, methyl ethyl ketone, methyl butyl ketone, and cyclohexanone, an aromatic solvent selected from toluene, xylene, and solvent naptha, an aliphatic solvent selected from cyclohexane, petroleum ether, white spirit, and turpentine, or a mixture thereof.

More preferably, the solvent is a glycol selected from methyl glycol, ethyl glycol, propyl glycol, and butyl glycol, a glycol ether selected from methoxy propanol, ethoxy propanol, diacetone propanol, methoxy butanol, dipropylene glycol monomethyl ether, tripropylene glycol methyl ether, propylene glycol mono methyl ether, di- or tri-propylene glycol mono propyl ether, and butyl diglycol, or a mixture thereof.

In particularly preferred embodiments, the solvent is butyl diglycol.

In the most preferred embodiments, the glass frit composition of step 5) comprises 60-70 wt.% of dry-milled frit, 1-3 wt.% of an alkylol ammonium salt of copolymer with acidic groups, polyvinylpyrrolidone, or a mixture thereof, and 29-37 wt.% of butyl diglycol.

Step 5) is preferably carried out by mixing in a high shear mixer and then wet-milling in a high speed mill (e.g. NETZSCH model LMZ10 horizontal sand mill, with a Zirconia grinding chamber), for up to 24 hours until the desired particle size is obtained. This results in a highly stable glass frit composition with no or negligible sedimentation and having the desired volume particle size distribution Dv₉₀ of less than 2 µm.

In another aspect, the present invention concerns a ceramic inkjet ink comprising:
- 20-60 wt. % of a glass frit composition as above described,
- 0-20 wt % of a pigment having a volume particle size distribution Dv₉₀ of less than 2 µm, as measured by laser diffraction,
- 20-60 wt. % of a solvent, and
- up to 5 wt % of a dispersant agent.

With "wt. %" it is meant weight percent of the total weight of the ceramic inkjet ink.

The ceramic inkjet ink composition according to the present invention shows advantageous properties, so that, at jetting, the following undesired effects are conveniently prevented: drop splattering, bleed and spread after landing on hard ceramic surfaces, such as glass. Additionally, the edge definition of the printed image during drying and tempering is retained.

Moreover, the ceramic inkjet ink composition according to the present invention has a high chemical resistance, e.g. resistance to acid, base, UV, a high mechanical resistance, e.g. scratch, abrasion, durability.

For the purposes of the present invention, the pigment can be any inorganic colour pigment. The inorganic pigments powder is produced by high temperature calcination. The pigments can be oxides of metals such as cobalt, iron, nickel, copper, titanium dioxide for different colours.

Examples of suitable inorganic pigments are Cobalt chromite Blue green Spinel (Shepherd Blue 211, Shepherd Blue 30C527), Cobalt Aluminate Blue Spinel (Rockwood Cobalt Blue 28, Rockwood Cobalt blue 419, Shepherd Blue 214, Shepherd Blue 299, Shepherd Blue 385, Shepherd Blue 424), Iron oxide (SiOF 1020, SiOF 3029M, SiOF 2019M, SiOF 3021M, Bayferrox 120, Bayferrox 180, Rockwood Ferroxide 206M), Manganese Ferrite (Rockwood FM2400), Nickel Antimony Titanium Yellow Rutile (Shepherd Yellow 25, Shepherd Yellow 195), Copper Chromite Black Spinel (Shepherd Black 1 GM, Shepherd Black 430), manganese ferrite (Rockwood FM2400), White: Huntsman TiO₂ A-HR; DuPont Ti-Pure® R-101, DuPont Ti-Pure® R-102, Green: Cobalt Titanate Green Spinel (Shepherd Green 223), Cobalt Chromite Blue Green Spinel (Shepherd Green 187 B). These pigments are heat resistant inorganic pigments, chemically inert and stable to ultraviolet light. They have high durability and hiding power.

The pigment type, size and its particle interaction can be adjusted during formulation to meet the final tempered colour of the ink as well as fulfil the requirement of hiding power (optical property used to describe the light-scattering efficiency of a white pigment) and opacity (degree to which light is not allowed to pass through).

Preferably, the pigment has a volume particle size distribution Dv₉₀ of less than 1 µm. Commercially available inorganic pigments have indeed a particle size greater than 2-3 microns, therefore said particle size is reduced to make the pigments suitable for inkjet printing.

Particularly, the pigment is milled and grinded in the presence of a dispersant agent and a solvent, thus resulting in a pigment paste having a pigment volume particle size distribution Dv₉₀ of less than 2 µm, preferably less than 1 µm.

Preferably, a bead/ball mill mixer is used with 1.75 mm zirconia grinding beads.

The combination of the dispersant agent and grinding step is crucial to obtain highly stable pigment paste with negligible/no sedimentation over long time.

Optionally, the ceramic inkjet ink can also comprise additives, such as carriers, rheology agents, surfactants, anti-settling/static agents, flow and levelling agents, de-foaming/deaeration agents, and resins. Appropriate additives can improve the surface grip after drying at temperature equal to or above 150°C, for manual handling.

Said additives can be in an amount up to 10 wt. % in order to improve jetting and substrate-adhesion performances. With "wt. %" it is meant weight percent of the total weight of the ceramic inkjet ink.

Suitable carriers can be mixtures of alkane waxes with a low melting point of 40-100°C, being solid at room temperature. Examples of such carriers are low melting paraffin wax. Alternatively, the carriers can be a mixture of linear C₁₀-C₂₄ alkanes, preferably linear C₁₀-C₂₂ alkanes, more preferably linear C₁₂-C₁₈ alkanes.

Suitable surfactants can be a solution of polyether-modified polydimethylsiloxane (commercially available as BYK-301, BYK-302, BYK 306, BYK 337, BYK 341), polyether modified polydimethylsiloxane (commercially available as BYK-307, BYK 333), solution of a polyester-modified polydimethylsiloxane (commercially available as BYK-310, BYK-313) solution of polyester-modified polymethylalkylsiloxane (commercially available as BYK-315) polyether modified dimethylpolysiloxane (commercially available as BYK378), or a mixture thereof.

Suitable flow and leveling agents can be polymeric, non silicone (commercially available as Dynoadd F-1, Dynoadd F-100, Dynoadd F-101, Dynoadd F-102), solution of polyester modified acrylic polymer (commercially available as Dynoadd F201), special dimethyl polysiloxanes (commercially available as Tego Flow ATF 2), polyether siloxane copolymer (commercially available as Tego Glide 100, Tego Wet 240), or a mixture thereof.

Suitable deaerating/defoaming agents can be Silicone free (commercially available as BYK 051, BYK 052, BYK 053, BYK 054, BYK 055, BYK 057, BYK 1752, BYK-A 535), emulsion of hydrophobic solids, emulsifiers and foam destroying polysiloxanes (commercially available as BYK-610), Fluoro-modified silicone defoamer (commercially available as Dynoadd F-470), non-silicone anionic (commercially available as Dynoadd F-603), organo-modified polysiloxane (commercially available as Tego Airex 900, Deaerating organic polymers with tip of silicone (commercially available as Tego Airex 990, Tego Airex 991), silicone free deaerator (commercially available as Tego Airex 920), solution of polyacrylate (commercially available as Tego Flow ZFS 460), or a mixture thereof.

Suitable rheology and anti-settling agents can be solution of modified urea (commercially available as BYK 410, BYK 420), solution of urea modified polyurethane (commercially available as BYK-425), solution of polyurethane with a highly branched structure (commercially available as BYK-428), solution of high molecular urea modified polar polyamide (commercially available as BYK-430, BYK-431), hybridised amide (commercially available as Disparlon AQH 800), non-ionic polyurethane based thickener (commercially available as Tego ViscoPlus 3000, Tego ViscoPlus 3030, Tego Viscoplus 3060), fumed silica (Aerosil), or a mixture thereof;

Suitable resins can be hydroxypropyl cellulose, hydroxyethyl cellulose, hydroxymethyl cellulose, nitrocellulose, methacrylic copolymer, or a mixture thereof.

In an additional aspect, the present invention concerns a process for producing the ceramic inkjet ink as above described, said process comprising the steps of:
a) preparing a pigment paste by milling and grinding pigment particles in the presence of a dispersant agent and a solvent to achieve a pigment volume particle size distribution Dv₉₀ of less than 2 µm;
b) preparing a glass frit composition according to the process above described, wherein in step 5) the wet-milling is carried out in the presence of a dispersant agent and a solvent;
c) mixing the pigment paste of step a) and the glass frit composition of step b) in a bead mixer;
d) adding a solvent to obtain a mixture having a solid content 30-60 wt. % on the total weight of the mixture; and
e) filtering the mixture of step d) through a micrometer pore size filter, thereby obtaining a ceramic inkjet ink having a viscosity of 6-20 mPa.s at jetting temperature and jetting conditions.

Preferably, the pigment paste of step a) is prepared as above described.

More preferably, the pigment paste of step a) comprises 45-85 wt. % pigment, 2-20 wt. % dispersant agent and 10-55 wt. % solvent.

Preferably, in step e) the micrometer pore size filter is a 20-micrometer pore size filter. With "wt. %" it is meant weight percent of the total weight of the pigment paste.

In preferred embodiments, the pigment paste of step a) comprises 50-80 wt. % pigment, 3-10 wt. % dispersant agent and 15-45 wt. % solvent.

Exemplary pigment pastes are the following:
- Black pigment paste 1
   Pigment: Shepherd 1G = 79%
   Dispersant agent: Disperbyk 180™: 4%
   Solvent: DPM = 17%
- Black pigment paste 2
   Pigment: Shepherd 1G = 50%
   Dispersant agent: Disperbyk 194N™: 8%
   Solvent: Butyl diglycol = 42%
- Black pigment paste 3
   Pigment: Shepherd 1G = 54%
   Dispersant agent: Disperbyk 194N™: 8%
   Solvent: Butyl diglycol = 39%
- Blue pigment paste
   Pigment: Shepherd 299 = 55%
   Dispersant agent: Lubrizol J955™: 8%
   Solvent: Butyl diglycol = 43%
- Red pigment paste
   Pigment: SiOF 3092M = 50%
   Dispersant agent: Lamberti Flujet 12/36™: 10%
   Solvent: Butyl diglycol = 40%
- White pigment paste
   Pigment: TiO₂ A-Hr = 52%
   Dispersant agent: Disperbyk 194N™: 5%
   Solvent: Butyl diglycol = 43%

In an even further aspect, the present invention concerns a ceramic inkjet ink obtainable by the process as above described, said inkjet ink having a viscosity of 6-20 mPa.s at jetting temperature and jetting conditions, a surface tension of 20-40 mN/m at 5-60°C, and a volume particle size distribution Dv₉₀ of less than 2 µm, as measured by laser diffraction. In another aspect, the present invention concerns a method for printing a ceramic substrate, comprising the step of inkjet printing a ceramic substrate with an inkjet ink as above described.

Preferably, said ceramic substrate is a glass substrate.

Particularly, said method comprises:
I) jetting the ceramic inkjet ink according to the present invention onto a ceramic substrate, preferably glass; and
II) drying the jetted ink on the substrate at temperature ≥ 150°C.

It should be understood that all aspects identified as preferred and advantageous for the glass frit composition and the ceramic inkjet ink are to be deemed as similarly preferred and advantageous also for the respective processes of production and method of printing of the present invention.

It should be also understood that all the combinations of preferred aspects of the glass frit composition, ceramic inkjet ink, their processes of production, as well as their uses in printing ceramic substrates, as above reported, are to be deemed as hereby disclosed. Below are working examples of the present invention provided for illustrative purposes.

### EXAMPLES

### Example 1.

A glass frit having the following composition has been prepared:

| | wt.% |
|---|---|
| SiO₂ | 27.1 |
| Bi₂O₃ | 50.3 |
| ZnO | 8.47 |
| B₂O₃ | 7.3 |
| Na₂O | 3.3 |
| K₂O | 0.8 |
| TiO₂ | 2.7 |
| Al₂O₃ | 0.03 |

### Example 2.

A glass frit having the following composition has been prepared:

| | wt. % |
|---|---|
| SiO₂ | 45.1 |
| ZnO | 12.5 |
| B₂O₃ | 18.6 |
| Na₂O | 7.92 |
| K₂O | 4.2 |
| CaO | 2.5 |
| TiO₂ | 3.4 |
| Li₂O | 3.3 |
| Al₂O₃ | 0.5 |
| BaO | 0.4 |
| MgO | 0.08 |
| P₂O₅ | 1.5 |

### Example 3.

A glass frit having the following composition has been prepared:

| | wt.% |
|---|---|
| SiO₂ | 33.2 |
| Bi₂O₃ | 46.1 |
| Li₂O | 2.9 |
| B₂O₃ | 9.13 |
| Na₂O | 2.1 |
| K₂O | 0.9 |
| TiO₂ | 4.7 |
| Al₂O₃ | 0.06 |
| Fe₂O₃ | 0.01 |
| SrO | 0.9 |

### Example 4.

A glass frit having the following composition has been prepared:

| | wt.% |
|---|---|
| SiO₂ | 34.5 |
| Bi₂O₃ | 43.2 |
| ZnO | 1.1 |
| B₂O₃ | 8.1 |
| Na₂O | 3.6 |
| K₂O | 0.9 |
| CaO | 0.5 |
| TiO₂ | 5.1 |
| Li₂O | 2.5 |
| Al₂O₃ | 0.5 |

### Example 5.

Glass frit pastes have been prepared by using the glass frits of Examples 1-4.

Each glass frit of Examples 1-4 has been suitably jet milled before been mixed with the dispersant agent and solvent, at the following amounts:
- Glass frit paste 1:
   - 65 wt. % jet milled glass frit
   - 1.75 wt. % polyvinylpyrrolidone
   - 33.25 wt. % butyl diglycol
- Glass frit paste 2:
   - 60 wt. % jet milled glass frit
   - 3 wt. % Disperbyk 180™
   - 27 wt. % butyl diglycol

The three components are initially mixed in a high shear mixer and then wet-milled in horizontal high speed mill with Zirconia grinding chamber in multi-pass operations for fixed time. This resulted in a highly stable frit with no or minimal sedimentation with a volume particle size distribution Dv₉₀ of less than 2 µm.

### Example 6.

The glass frit paste 1 prepared as per Example 5 has been used to produce the following inkjet inks:

| **Inkjet ink 6a** | wt. % | Solid content % | Properties |
|---|---|---|---|
| Glass frit paste 1 | 57.2 | 50 | |
| Black pigment paste 2 | 24.3 | | η_{25°C} = 22 mPa.s, |
| Surfactant BYK 378 | 0.3 | | σ_{25°C} = 28 mN/m |
| | | | Dv₉₀ = 1.8 µm |
| Butyl glycol | 18.2 | | |

| **Inkjet ink 6b** | wt. % | Solid content % | Properties |
|---|---|---|---|
| Glass frit paste 1 | 57.2 | 50 | |
| Black pigment paste 3 | 24.3 | | η_{25°C} = 23 mPa.s, |
| Surfactant BYK 378 | 0.5 | | σ_{25°C} = 25 mN/m |
| | | | Dv₉₀ = 1.8 µm |
| Butyl glycol | 18.2 | | |

| **Inkjet ink 6c** | wt. % | Solid content % | Properties |
|---|---|---|---|
| Glass frit paste 1 | 45.0 | 40 | |
| Black pigment paste 1 | 14.0 | | η_{25°C} = 13 mPa.s, |
| Surfactant BYK 337 | 0.5 | | σ_{25°C} = 25 mN/m |
| | | | Dv₉₀ = 1.3 µm |
| Methacrylic copolymer resin | 4.0 | | |
| Dipropylene glycol monomethylether, Butyl Glycol | 38.5 | | |

where η_{25°C} is the viscosity at 25°C and σ_{25°C} is the surface tension at 25°C.

The above inkjet inks have been prepared by wet-mixing mill frit and pigment paste in bead mill mixer for 20 min, and then filtering the resulting inks by using a 20-micrometer pore size filter.

### Example 7.

### Jetting performances

The jetting of these inks at the jetting temperature of 30-45°C with standard commercial inkjet printing system showed reliable jetting.

Overall performance of the inks were very good satisfying low mistings and satellites and good jetting reliability. No nozzle blockage, print failures was observed.

Printing on the glass was performed in single pass and multipass (several layers) in order to achieve sufficient thickness to meet the final requirements such as optical density after high temperature heat treatment or tempering at temperature above 500°C.

Final printed pattern on the glass showed good colour, hiding power and good mechanical and chemical resistance.

### Example 8.

### Influence of choice of components and process steps on final ink properties

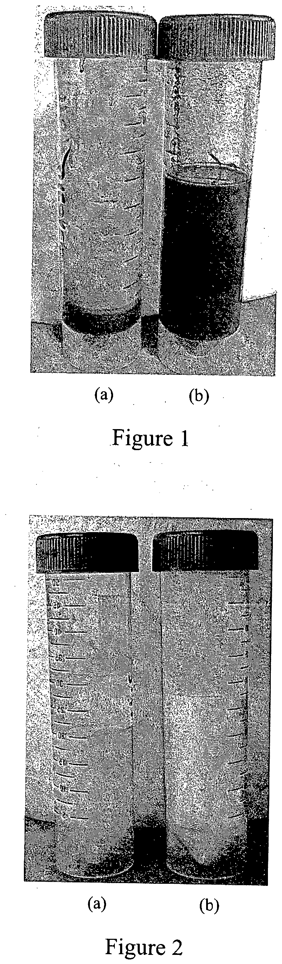

Non-optimised mixing and milling steps result in non-homogeneous mixture between frits and pigments and hence sedimentations of pigments (Figure 1a). Conversely, the inkjet inks prepared according to the present invention, after 1 month, show a very stable and homogeneous mixture, without pigment sedimentation (Figure 1b).

Similarly, the non-optimisation of components, i.e. dispersant agent and solvent, results in non-homogeneous mixture between frits and pigments and hence sedimentation and flocculation (Figure 2a). Conversely, the inkjet inks prepared according to the present invention, after 1 week, show a very stable and homogeneous mixture, without pigment sedimentation (Figure 2b).

The ink rheology is tailored to achieve controlled shear thinning behaviour to reduce particle sedimentation during storage and drop spread/bleeding on glass substrate.
- Low shear viscosity (at shear rates < 50 1/s) is deliberately maintained at least several times greater than that of the high shear steady viscosity of 6-20 mPa.s (at shear rate > 1000 1/s) at the jetting temperature.
   ∘ This delays/prevent ink sedimentation during storage.
   ∘ The viscosity of the ink in the printhead channel prior to jetting drops to 6-20 mPa.s meeting printhead bulk viscosity requirements creating optimum condition for drop ejection and generate reliable drop in-flight.
   ∘ After the drop lands on the substrate, the viscosity is quickly increased thus
      ▪ minimising drop spread upon impact
      ▪ maintaining drop edge definition

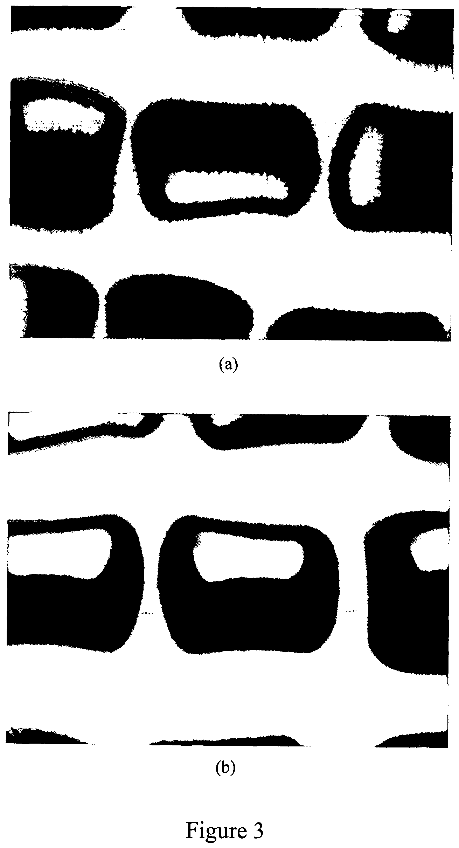

Prevent ink fingering/dendrite instability formation which sometime forms as a result of air-stream caused by fast linear carriage movement of printhead during printing or marangoni stress, or contaminated glass substrate (Figure 3a, comparative, and 3b, according to the invention).

Static surface tension is 20-40 mN/m to meet the printhead and substrate requirements.
- The static surface tension satisfies the drop contact angle on substrate.
- The choice of the surfactant is carefully controlled to achieve final static value.

Uniform distribution of the particles during drying is obtained, thus preventing particle migration towards the edges or to the centre.

## Claims

1. A glass frit composition comprising:
- 20-49 wt. % SiO₂,
- 3-20 wt. % B₂O₃,
- 1-9 wt. % Na₂O,
- 0.1-5 wt. % K₂O,
- 1-7 wt. % TiO₂,
- 0.01-5 wt. % Al₂O₃, and
- a mixture of:
i) 50-60 wt. % Bi₂O₃, and 7-35 wt. % ZnO, or
ii) 7-15 wt. % ZnO, and up to 5 wt. % Li₂O, or
iii) 45-55 wt. % Bi₂O₃, and up to 5 wt. % Li₂O, or
iv) 40-45 wt. % Bi₂O₃, 0.5-3 wt. % ZnO, and up to 4 wt. % Li₂O,
said glass frit composition being in the form of particles having a volume particle size distribution Dv₉₀ of less than 2 µm, as measured by laser diffraction,
wherein "wt. %" means weight percent of the total weight of the glass frit composition.

2. The glass frit composition according to claim 1, further comprising up to 7 wt. % of ZrO, CaO, BaO, MgO, P₂O₅, Fe₂O₃, SrO, or a mixture thereof.

3. The glass frit composition according to claim 1 or 2, comprising:
- 20-30 wt. % SiO₂,
- 3-10 wt. % B₂O₃,
- 1-5 wt. % Na₂O,
- 0.1-2 wt. % K₂O,
- 1-5 wt. % TiO₂,
- 0.01-5 wt. % Al₂O₃, and
- a mixture of i) 50-60 wt. % Bi₂O₃, and 7-35 wt. % ZnO.

4. The glass frit composition according to claim 1 or 2, comprising:
- 40-49 wt. % SiO₂,
- 10-20 wt. % B₂O₃,
- 5-9 wt. % Na₂O,
- 2-5 wt. % K₂O,
- 1-5 wt. % TiO₂,
- 0.1-1 wt. % Al₂O₃, and
- a mixture of ii) 7-15 wt. % ZnO, and up to 5 wt. % Li₂O.

5. The glass frit composition according to claim 1 or 2, comprising:
- 30-40 wt. % SiO₂,
- 3-10 wt. % B₂O₃,
- 1-5 wt. % Na₂O,
- 0.1-2 wt. % K₂O,
- 2-7 wt. % TiO₂,
- 0.01-0.5 wt. % Al₂O₃, and
- a mixture of iii) 45-55 wt. % Bi₂O₃, and up to 5 wt. % Li₂O.

6. The glass frit composition according to claim 1 or 2, comprising:
- 30-40 wt. % SiO₂,
- 3-10 wt. % B₂O₃,
- 1-5 wt. % Na₂O,
- 0.1-2 wt. % K₂O,
- 3-7 wt. % TiO₂,
- 0.01-1 wt. % Al₂O₃, and
- a mixture of iv) 40-45 wt. % Bi₂O₃, 0.5-3 wt. % ZnO, and up to 4 wt. % Li₂O.

7. The glass frit composition according to any one of claims 1-6, said glass frit composition being in the form of particles having a volume particle size distribution Dv₉₀ of less than 1 µm, as measured by laser diffraction.

8. A process for producing the glass frit composition of claim 1, comprising the steps of:
1) mixing the oxides of the glass frit composition;
2) melting the mixed oxides to obtain a melted mixture;
3) cooling the obtained melted mixture;
4) dry-milling the so-cooled mixture to obtain a milled frit having a volume particle size distribution Dv₉₀ of less than 8 µm, preferably of 5 to 8 µm; and
5) wet-milling the dry-milled frit to achieve a volume particle size distribution Dv₉₀ of less than 2 µm.

9. A ceramic inkjet ink comprising:
- 20-60 wt. % of a glass frit composition according to any one of claims 1-7,
- 0-20 wt % of a pigment having a volume particle size distribution Dv₉₀ of less than 2 µm, as measured by laser diffraction,
- 20-60 wt. % of a solvent, and
- up to 5 wt % of a dispersant agent.

10. The inkjet ink of claim 9, wherein the pigment has a volume particle size distribution Dv₉₀ of less than 1 µm.

11. The inkjet ink of claim 9 or 10, wherein the dispersant agent is a copolymer with acidic group, alkylol ammonium salt of copolymer with acidic groups, solution of high molecular weight block copolymers with pigment affinic groups, copolymer with pigment affinic groups, block-copolymer with pigment affinic groups, solution of alkylol ammonium salt of a higher molecular weight acidic polymer, structured acrylate copolymer with pigment affinic groups, polyvinylpyrrolidone, polymeric hyperdispersant or a mixture thereof.

12. The inkjet ink of any one of claims 9-11, wherein the solvent is an alcohol, selected from methyl alcohol, ethyl alcohol, propyl alcohol, and butyl alcohol, a glycol selected from methyl glycol, ethyl glycol, propyl glycol, and butyl glycol, a glycol ether selected from methoxy propanol, ethoxy propanol, diacetone propanol, methoxy butanol, dipropylene glycol monomethyl ether, tripropylene glycol methyl ether, propylene glycol mono methyl ether, di- or tri-propylene glycol mono propyl ether, and butyl diglycol, an ester selected from methyl acetate, ethyl acetate, propyl acetate, butyl acetate, methoxy propyl acetate, and ethyl-3-ethoxy-propanol, a ketone selected from acetone, methyl ethyl ketone, methyl butyl ketone, and cyclohexanone, an aromatic solvent selected from toluene, xylene, and solvent naptha, an aliphatic solvent selected from cyclohexane, petroleum ether, white spirit, and turpentine, water or a mixture thereof.

13. A process for producing the ceramic inkjet ink of claim 9, comprising the steps of:
a) preparing a pigment paste by milling and grinding pigment particles in the presence of a dispersant agent and a solvent to achieve a pigment volume particle size distribution Dv₉₀ of less than 2 µm;
b) preparing a glass frit composition according to the process of claim 8, wherein in step 5) the wet-milling is carried out in the presence of a dispersant agent and a solvent;
c) mixing the pigment paste of step a) and the glass frit composition of step b) in a bead mixer;
d) adding a solvent to obtain a mixture having a solid content 30-60 wt. % on the total weight of the mixture; and
e) filtering the mixture of step d) through a micrometer pore size filter, thereby obtaining a ceramic inkjet ink having a viscosity of 6-20 mPa.s at jetting temperature and jetting conditions.

14. The process of claim 13, wherein the pigment paste of step a) comprises 45-85 wt. % pigment, 2-20 wt. % dispersant agent and 10-55 wt. % solvent.

15. A ceramic inkjet ink obtainable by the process of claim 13 or 14, said inkjet ink having a viscosity of 6-20 mPa.s at jetting temperature and jetting conditions, a surface tension of 20-40 mN/m at 5-60°C, and a volume particle size distribution Dv₉₀ of less than 2 µm, as measured by laser diffraction.

16. A method for printing a ceramic substrate, comprising the step of inkjet printing a ceramic substrate with a inkjet ink according to any one of claims 9-12 and 15.

## Patentansprüche

1. Glasfrittenzusammensetzung, umfassend:
- 20-49 Gew.-% SiO₂,
- 3-20 Gew.-% B₂O₃,
- 1-9 Gew.-% Na₂O,
- 0,1-5 Gew.-% K₂O,
- 1-7 Gew.-% TiO₂,
- 0,01-5 Gew.-% Al₂O₃, und
- ein Gemisch aus:
i) 50-60 Gew.-% Bi₂O₃, und 7-35 Gew.-% ZnO, oder
ii) 7-15 Gew.-% ZnO, und bis zu 5 Gew.-% Li₂O, oder
iii) 45-55 Gew.-% Bi₂O₃, und bis zu 5 Gew.-% Li₂O, oder
iv) 40-45 Gew.-% Bi₂O₃, 0,5-3 Gew.-% ZnO, und bis zu 4 Gew.-% Li₂O,
wobei die Glasfrittenzusammensetzung in der Form von Partikeln ist, die eine Volumenpartikelgrößenverteilung Dv₉₀ von weniger als 2 µm gemessen durch Laserbeugung aufweist, wobei "Gew.-%" Gewichtsprozent des Gesamtgewichts der Glasfrittenzusammensetzung bedeutet.

2. Glasfrittenzusammensetzung nach Anspruch 1, ferner umfassend bis zu 7 Gew.-% ZrO, CaO, BaO, MgO, P₂O₅, Fe₂O₃, SrO, oder ein Gemisch davon.

3. Glasfrittenzusammensetzung nach Anspruch 1 oder 2, umfassend:
- 20-30 Gew.-% SiO₂,
- 3-10 Gew.-% B₂O₃,
- 1-5 Gew.-% Na₂O,
- 0,1-2 Gew.-% K₂O,
- 1-5 Gew.-% TiO₂,
- 0,01-5 Gew.-% Al₂O₃, und
- ein Gemisch aus i) 50-60 Gew.-% Bi₂O₃, und 7-35 Gew.-% ZnO.

4. Glasfrittenzusammensetzung nach Anspruch 1 oder 2, umfassend:
- 40-49 Gew.-% SiO₂,
- 10-20 Gew.-% B₂O₃,
- 5-9 Gew.-% Na₂O,
- 2-5 Gew.-% K₂O,
- 1-5 Gew.-% TiO₂,
- 0,1-1 Gew.-% Al₂O₃, und
- ein Gemisch aus ii) 7-15 Gew.-% ZnO, und bis zu 5 Gew.-% Li₂O.

5. Glasfrittenzusammensetzung nach Anspruch 1 oder 2, umfassend:
- 30-40 Gew.-% SiO₂,
- 3-10 Gew.-% B₂O₃,
- 1-5 Gew.-% Na₂O,
- 0,1-2 Gew.-% K₂O,
- 2-7 Gew.-% TiO₂,
- 0,01-0,5 Gew.-% Al₂O₃, und
- ein Gemisch aus iii) 45-55 Gew.-% Bi₂O₃, und bis zu 5 Gew.-% Li₂O.

6. Glasfrittenzusammensetzung nach Anspruch 1 oder 2, umfassend:
- 30-40 Gew.-% SiO₂,
- 3-10 Gew.-% B₂O₃,
- 1-5 Gew.-% Na₂O,
- 0,1-2 Gew.-% K₂O,
- 3-7 Gew.-% TiO₂,
- 0,01-1 Gew.-% Al₂O₃, und
- ein Gemisch aus iv) 40-45 Gew.-% Bi₂O₃, 0,5-3 Gew.-% ZnO, und bis zu 4 Gew.-% Li₂O.

7. Glasfrittenzusammensetzung nach einem der Ansprüche 1 bis 6, wobei die Glasfrittenzusammensetzung in der Form von Partikeln ist, die eine Volumenpartikelgrößenverteilung Dv₉₀ von weniger als 1 µm gemessen durch Laserbeugung aufweisen.

8. Verfahren zum Herstellen der Glasfrittenzusammensetzung nach Anspruch 1, umfassend die folgenden Schritte:
1) Mischen der Oxide der Glasfrittenzusammensetzung;
2) Schmelzen der gemischten Oxide, um ein geschmolzenes Gemisch zu erlangen;
3) Abkühlen des erlangten geschmolzenen Gemischs;
4) Trockenmahlen des somit abgekühlten Gemischs, um eine gemahlene Fritte zu erlangen, die eine Volumenpartikelgrößenverteilung Dv₉₀ von weniger als 8 µm, vorzugsweise von 5 bis 8 µm aufweist; und
5) Nassmahlen der trockengemahlenen Fritte, um eine Volumenpartikelgrößenverteilung Dv₉₀ von weniger als 2 µm zu erreichen.

9. Keramische Tintenstrahltinte, umfassend:
- 20-60 Gew .-% einer Glasfrittenzusammensetzung nach einem der Ansprüche 1-7,
- 0-20 Gew .-% eines Pigments, das eine Volumenpartikelgrößenverteilung Dv₉₀ von weniger als 2 µm gemessen durch Laserbeugung aufweist,
- 20-60 Gew .-% eines Lösungsmittels, und
- bis zu 5 Gew .-% eines Dispergiermittels.

10. Tintenstrahltinte nach Anspruch 9, wobei das Pigment eine Volumenpartikelgrößenverteilung Dv₉₀ von weniger als 1 µm aufweist.

11. Tintenstrahltinte nach Anspruch 9 oder 10, wobei das Dispergiermittel ein Copolymer mit saurer Gruppe, ein Alkylolammoniumsalz des Copolymers mit sauren Gruppen, eine Lösung von Blockcopolymeren mit hohem Molekulargewicht mit pigmentaffinen Gruppen, ein Copolymer mit pigmentaffinen Gruppen, ein Blockcopolymer ist mit pigmentaffinen Gruppen, eine Lösung eines Alkylolammoniumsalzes eines sauren Polymers mit höherem Molekulargewicht, ein strukturiertes Acrylatcopolymer mit pigmentaffinen Gruppen, Polyvinylpyrrolidon, ein polymeres Hyperdispersionsmittel oder ein Gemisch davon ist.

12. Tintenstrahltinte nach einem der Ansprüche 9-11, wobei das Lösungsmittel ein Alkohol ist, ausgewählt aus Methylalkohol, Ethylalkohol, Propylalkohol und Butylalkohol, ein Glykol, ausgewählt aus Methylglykol, Ethylglykol, Propylglykol und Butylglykol, ein Glykolether, ausgewählt aus Methoxypropanol, Ethoxypropanol, Diacetonpropanol, Methoxybutanol, Dipropylenglykolmonomethylether, Tripropylenglykolmethylether, Propylenglykolmonomethylether, Di- oder Tri-Propylenglykol-Monopropyl-Ether und Butyldiglykol, ein Ester, ausgewählt aus Methylacetat, Ethylacetat, Propylacetat, Butylacetat, Methoxypropylacetat und Ethyl-3-Ethoxypropanol, ein Keton, ausgewählt aus Aceton, Methylethylketon, Methylbutylketon und Cyclohexanon, ein aromatisches Lösungsmittel, ausgewählt aus Toluol, Xylol und Lösungsmittelnaphtha, ein aliphatisches Lösungsmittel, ausgewählt aus Cyclohexan, Petrolether, Testbenzin und Terpentin, Wasser oder ein Gemisch davon.

13. Verfahren zum Herstellen der keramischen Tintenstrahltinte nach Anspruch 9, umfassend die folgenden Schritte:
a) Herstellen einer Pigmentpaste durch Mahlen und Zerreiben von Pigmentpartikeln in Anwesenheit eines Dispergiermittels und eines Lösungsmittels, um eine Pigmentvolumen-Partikelgrößenverteilung Dv₉₀ von weniger als 2 µm zu erreichen;
b) Herstellen einer Glasfrittenzusammensetzung gemäß dem Verfahren nach Anspruch 8, wobei in Schritt 5) das Nassmahlen in Anwensenheit eines Dispergiermittels und eines Lösungsmittels durchgeführt wird;
c) Mischen der Pigmentpaste von Schritt a) und der Glasfrittenzusammensetzung von Schritt b) in einem Kugelmischer;
d) Hinzufügen eines Lösungsmittels, um ein Gemisch mit einem Feststoffgehalt von 30 bis 60 Gew.-% bezogen auf das Gesamtgewicht des Gemischs zu erlangen; und
e) Filtrieren des Gemischs von Schritt d) durch einen Filter in Mikrometerporengröße, wodurch eine keramische Tintenstrahltinte erlangt wird, die eine Viskosität von 6 bis 20 mPa·s bei Strahltemperatur und Strahlbedingungen erlangt wird.

14. Verfahren nach Anspruch 13, wobei die Pigmentpaste von Schritt a) 45 bis 85 Gew.-% Pigment, 2-20 Gew.-% Dispergiermittel und 10-55 Gew.-% Lösungsmittel umfasst.

15. Keramische Tintenstrahltinte, die durch das Verfahren nach Anspruch 13 oder 14 erlangt werden kann, wobei die Tintenstrahltinte eine Viskosität von 6 bis 20 mPa·s bei Strahltemperatur und Strahlbedingungen, eine Oberflächenspannung von 20 bis 40 mN/m bei 5 bis 60 °C und eine Volumenpartikelgrößenverteilung Dv₉₀ von weniger als 2 µm gemessen durch Laserbeugung aufweist.

16. Verfahren zum Drucken eines Keramiksubstrats, umfassend den Schritt eines Tintenstrahldrucks eines Keramiksubstrats mit einer Tintenstrahltinte gemäß einem der Ansprüche 9-12 und 15.

## Revendications

1. Composition pour fritte de verre comprenant :
- 20-49 % en poids de SiO₂,
- 3-20 % en poids de B₂O₃,
- 1-9 % en poids de Na₂O,
- 0,1-5 % en poids de K₂O,
- 1-7 % en poids de TiO₂,
- 0,01-5 % en poids d'Al₂O₃, et
- un mélange de :
i) 50-60 % en poids de Bi₂O₃, et 7-35 % en poids de ZnO, ou
ii) 7-15 % en poids de ZnO, et jusqu'à 5 % en poids de Li₂O, ou
iii) 45-55 % en poids de Bi₂O₃, et jusqu'à 5 % en poids de Li₂O, ou
iv) 40-45 % en poids de Bi₂O₃, 0,5-3 % en poids de ZnO, et jusqu'à 4 % en poids de Li₂O,
ladite composition pour fritte de verre étant sous la forme de particules ayant une distribution granulométrique volumique Dv₉₀ inférieure à 2 µm, mesurée par diffraction laser,
dans laquelle "% en poids" désigne le pourcentage en poids du poids total de la composition pour fritte de verre.

2. Composition pour fritte de verre selon la revendication 1, comprenant en outre jusqu'à 7 % en poids de ZrO, CaO, BaO, MgO, P₂O₅, Fe₂O₃, SrO, ou d'un mélange de ceux-ci.

3. Composition pour fritte de verre selon la revendication 1 ou 2, comprenant :
- 20-30 % en poids de SiO₂,
- 3-10 % en poids de B₂O₃,
- 1-5 % en poids de Na₂O,
- 0,1-2 % en poids de K₂O,
- 1-5 % en poids de TiO₂,
- 0,01-5 % en poids de Al₂O₃, et
- un mélange de i) 50-60 % en poids de Bi₂O₃, et 7-35 % en poids de ZnO.

4. Composition pour fritte de verre selon la revendication 1 ou 2, comprenant :
- 40-49 % en poids de SiO₂,
- 10-20 % en poids de B₂O₃,
- 5-9 % en poids de Na₂O,
- 2-5 % en poids de K₂O,
- 1-5 % en poids de TiO₂,
- 0,1-1 % en poids de Al₂O₃, et
- un mélange de ii) 7-15 % en poids de ZnO, et jusqu'à 5 % en poids de Li₂O.

5. Composition pour fritte de verre selon la revendication 1 ou 2, comprenant :
- 30-40 % en poids de SiO₂,
- 3-10 % en poids de B₂O₃,
- 1-5 % en poids de Na₂O,
- 0,1-2 % en poids de K₂O,
- 2-7 % en poids de TiO₂,
- 0,01-0,5 % en poids de Al₂O₃, et
- un mélange de iii) 45-55 % en poids de Bi₂O₃, et jusqu'à 5 % en poids de Li₂O.

6. Composition pour fritte de verre selon la revendication 1 ou 2, comprenant :
- 30-40 % en poids de SiO₂,
- 3-10 % en poids de B₂O₃,
- 1-5 % en poids de Na₂O,
- 0,1-2 % en poids de K₂O,
- 3-7 % en poids de TiO₂,
- 0,01-1 % en poids d'Al₂O₃, et
- un mélange de iv) 40-45 % en poids de Bi₂O₃, 0,5-3 % en poids de ZnO, et jusqu'à 4 % en poids de Li₂O.

7. Composition pour fritte de verre selon l'une quelconque des revendications 1-6, ladite composition pour fritte de verre étant sous la forme de particules ayant une distribution granulométrique volumique Dv₉₀ inférieure à 1 µm, mesurée par diffraction laser.

8. Procédé pour produire la composition pour fritte de verre selon la revendication 1, comprenant les étapes de :
1) mélange des oxydes de la composition pour fritte de verre ;
2) fusion des oxydes mélangés pour obtenir un mélange fondu ;
3) refroidissement du mélange fondu obtenu ;
4) broyage à sec du mélange ainsi refroidi pour obtenir une fritte broyée ayant une distribution granulométrique volumique Dv₉₀ inférieure à 8 µm, de préférence de 5 à 8 µm ; et
5) broyage humide de la fritte broyée à sec pour obtenir une distribution granulométrique volumique Dv₉₀ inférieure à 2 µm.

9. Encre pour jet d'encre céramique comprenant :
- 20-60 % en poids d'une composition pour fritte de verre selon l'une quelconque des revendications 1-7,
- 0-20 % en poids d'un pigment ayant une distribution granulométrique volumique Dv₉₀ inférieure à 2 µm, mesurée par diffraction laser,
- 20-60 % en poids d'un solvant, et
- jusqu'à 5 % en poids d'un agent dispersant.

10. Encre pour jet d'encre selon la revendication 9, dans laquelle le pigment a une distribution granulométrique volumique Dv₉₀ inférieure à 1 µm.

11. Encre pour jet d'encre selon la revendication 9 ou 10, dans laquelle l'agent dispersant est un copolymère avec un groupe acide, un sel d'ammonium-alkoylalcool de copolymère avec groupes acides, une solution de copolymères blocs de masse moléculaire élevée avec groupes affiniques pigmentaires, des copolymères avec groupes affiniques pigmentaires, des copolymères blocs avec groupes affiniques pigmentaires, une solution de sel d'ammonium-alkoylalcool d'un polymère acide de masse moléculaire plus élevée, un copolymère d'acrylate structuré avec groupes affiniques pigmentaires, la polyvinylpyrrolidone, un hyperdispersant polymérique ou un mélange de ceux-ci.

12. Encre pour jet d'encre selon l'une quelconque des revendications 9-11, dans laquelle le solvant est un alcool sélectionné entre : alcool méthylique, alcool éthylique, alcool propylique et alcool butylique, un glycol sélectionné entre : méthylglycol, éthylglycol, propylglycol et butylglycol, un éther glycolique sélectionné entre : méthoxy-propanol, éthoxy-propanol, diacétone-propanol, méthoxy-butanol, éther monométhylique de dipropylène-glycol, éther méthylique de tripropylène-glycol, éther monométhylique de propylène-glycol, éther monopropylique de di- ou tripropylène-glycol, et diglycol butylique, un ester sélectionné entre : acétate de méthyle, acétate d'éthyle, acétate de propyle, acétate de butyle, acétate de méthoxypropyle, et éthyl-3-éthoxy-propanol, un cétone sélectionné entre : acétone, méthyléthylcétone, méthylbutylcétone, et cyclohexanone, un solvant aromatique sélectionné entre : toluène, xylène, et un solvant naphta, un solvant aliphatique sélectionné entre : cyclohexane, éther de pétrole, white-spirit et térébenthine, eau ou un mélange de ces composants.

13. Procédé pour produire l'encre pour jet d'encre céramique selon la revendication 9, comprenant les étapes de :
a) préparation d'une pâte pigmentaire par broyage et mouture de particules de pigment en présence d'un agent dispersant et d'un solvant pour obtenir une distribution granulométrique volumique pigmentaire Dv₉₀ de moins de 2 µm;
b) préparation d'une composition pour fritte de verre selon le procédé de la revendication 8, dans laquelle, dans l'étape 5), le broyage humide est effectué en présence d'un agent dispersant et d'un solvant ;
c) mélange de la pâte pigmentaire de l'étape a) et de la composition pour fritte de verre de l'étape b) dans un mélangeur à billes ;
d) adjonction d'un solvant pour obtenir un mélange ayant une teneur en solides de 30-60 % en poids du mélange ; et
e) filtration du mélange de l'étape d) par un filtre à pores de taille micrométrique, pour obtenir ainsi une encre pour jet d'encre céramique ayant une viscosité de 6-20 mPa.s à la température de projection et dans les conditions de projection.

14. Procédé selon la revendication 13, dans lequel la pâte pigmentaire de l'étape a) comprend 45-85 % en poids de pigment, 2-20 % en poids d'agent dispersant et 10-55 % en poids de solvant.

15. Encre pour jet d'encre céramique pouvant être obtenue par le procédé de la revendication 13 ou 14, ladite encre pour jet d'encre ayant une viscosité de 6-20 mPa.s à la température de projection et dans les conditions de projection, une tension de surface 20-40 mN/m à 5-60°C, et une distribution granulométrique volumique Dv₉₀ de moins de 2 µm, mesurée par diffraction laser.

16. Procédé pour imprimer un substrat céramique, comprenant l'étape d'impression par jets d'encre d'un substrat céramique avec une encre pour jet d'encre selon l'une quelconque des revendications 9-12 et 15.
